(19) Europäisches Patentamt
European Patent Office
Office européen des brevets

(11) **EP 4 668 266 A1**

(12) **EUROPEAN PATENT APPLICATION**
published in accordance with Art. 153(4) EPC

(43) Date of publication:
**24.12.2025 Bulletin 2025/52**

(21) Application number: **24787937.2**

(22) Date of filing: **29.03.2024**

(51) International Patent Classification (IPC):
**G10L 21/0264** (2013.01)    **G01M 13/028** (2019.01)
**G01M 13/045** (2019.01)

(52) Cooperative Patent Classification (CPC):
**G01M 13/028; G01M 13/045; G10L 21/0264**

(86) International application number:
**PCT/CN2024/084973**

(87) International publication number:
**WO 2024/212832 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 10.04.2023  CN 202310372548
                10.04.2023  CN 202320768609 U
                10.04.2023  CN 202310372444
                10.04.2023  CN 202320768785 U
                10.04.2023  CN 202320777246 U
                10.04.2023  CN 202310372479

(71) Applicants:
• **China Petroleum & Chemical Corporation
  Beijing 100728 (CN)**
• **Sinopec Research Institute of Safety
  Engineering Co., Ltd.
  Qingdao, Shandong 266104 (CN)**

(72) Inventors:
• **QIU, Feng
  Qingdao, Shandong 266104 (CN)**

• **XU, Wei
  Qingdao, Shandong 266104 (CN)**
• **QU, Dingrong
  Qingdao, Shandong 266104 (CN)**
• **CHEN, Wenwu
  Qingdao, Shandong 266104 (CN)**
• **NIU, Luna
  Qingdao, Shandong 266104 (CN)**
• **HUANG, Xin
  Qingdao, Shandong 266104 (CN)**
• **CHEN, Mindong
  Qingdao, Shandong 266104 (CN)**
• **LIU, Yuanshuang
  Qingdao, Shandong 266104 (CN)**
• **NING, Zhikang
  Qingdao, Shandong 266104 (CN)**
• **LIU, Xiaojin
  Qingdao, Shandong 266104 (CN)**

(74) Representative: **Hoffmann Eitle
Patent- und Rechtsanwälte PartmbB
Arabellastraße 30
81925 München (DE)**

(54) **MOVING-DEVICE FAULT DETECTION METHOD AND SYSTEM**

(57)    A moving-device fault detection method and system, belongs to the technical field of fault detection. The method comprises: collecting a measurement signal of a target device (S10); performing fault type classification on the measurement signal on the basis of an auto-correlation characteristic (S20); on the basis of the classification result, selecting a corresponding fault diagnosis model (S30); and performing fault diagnosis on the basis of the selected fault diagnosis model and the measurement signal to obtain a diagnosis result (S40). On the basis of a fault type distinguishing result, the present invention performs adaptive diagnosis model selection to ensure that the selected diagnosis model is a fault detection model suitable for current signal feature rules, thereby achieving differentiated moving-device fault diagnosis solutions, and improving the accuracy of fault diagnosis results.

EP 4 668 266 A1

A detection signal of target equipment is acquired ⟋ S10

A fault type of the detection signal is classified based on an autocorrelation characteristic ⟋ S20

A corresponding fault diagnosis model Is selected based on a classification result ⟋ S30

A fault is diagnosed based on the fault diagnosis model selected and the detection signal, so as to obtain a diagnosis result ⟋ S40

Fig. 1

## Description

### Field of the Invention

The disclosure relates to the technical field of fault detection, and in particular to a method for detecting a fault of mechanical equipment and a system for detecting a fault of mechanical equipment.

### Background of the Invention

Mechanical equipment, a type of core power equipment for enterprise production, such as electric motor equipment and gear equipment is applied to the enterprise production in an extensive range. Since the stability of the equipment directly affects the safety of a production process, it is essential to inspect an operation state of the mechanical equipment during production. According to an existing fault detection technology for the mechanical equipment, a vibration state signal of the mechanical equipment is acquired principally through manual routine inspection, and then a fault of the mechanical equipment is detected based on the vibration signal acquired. In this way, it is common practice to pre-train a model with a feature signal acquired as an input parameter, and obtain a fault diagnosis result based on a training result. However, mechanical equipments have different conditions with different working contents, working states, working structures, working fluids, etc.. Differences between fault feature signals corresponding to different fault types are huge. If the fault is diagnosed based on features extracted from a variety of signals with huge differences through a single fixed model, it is difficult to ensure precision of the diagnosis result. It is a pressing issue to create a new method for detecting a fault of mechanical equipment, so as to solve a problem of low accuracy of an existing solution for detecting a fault of mechanical equipment.

### Summary of the Invention

An objective in embodiments of the disclosure is to provide a method and system for detecting a fault of mechanical equipment, so as to solve at least a problem of low accuracy of an existing solution for detecting a fault of mechanical equipment.

In order to realize the above objective, in a first aspect, the disclosure provides a method for detecting a fault of mechanical equipment. The method includes: acquiring a detection signal of target equipment; classifying a fault type of the detection signal based on an autocorrelation characteristic; selecting a corresponding fault diagnosis model based on a classification result; and diagnosing the fault based on the fault diagnosis model selected and the detection signal, so as to obtain a diagnosis result.

In a second aspect, the disclosure provides a device for detecting a fault of mechanical equipment. The device includes: a signal acquisition module configured to acquire a detection signal of target equipment; a signal classification module configured to classify a fault type of the detection signal based on an autocorrelation characteristic; a model selection module configured to select a corresponding fault diagnosis model based on a classification result; and a fault diagnosis module configured to diagnose the fault based on the fault diagnosis model selected and the detection signal, so as to obtain a diagnosis result.

In a third aspect, the disclosure provides a system for detecting a fault of mechanical equipment. The system includes the above device for detecting a fault of mechanical equipment.

In a fourth aspect, the disclosure provides a computer-readable storage medium. The computer-readable storage medium stores an instruction, where when run on a computer, the instruction causes the computer to execute the above method for detecting a fault of mechanical equipment.

Through the above technical solutions, signal feature differences between different fault types are fully considered, and the fault types with sharp differences are differentiated based on the easily-differentiable autocorrelation characteristics in the solution of the disclosure. Thus, the technical solution for differentiating the fault type based on the signal feature is realized, and the problem that a fault type of composite equipment cannot be differentiated according to an existing fault type differentiation solution based on a fault type is avoided. An adaptive diagnosis model is selected based on the differentiation result of the fault type. Thus, it is ensured that the diagnosis model selected is a fault detection model that adapts to a current signal feature rule, so that differentiated solutions for diagnosing faults of the mechanical equipment are realized, and precision of a fault diagnosis result is improved.

Other features and advantages in the embodiments of the disclosure will be described in detail in the following particular embodiments.

### Brief Description of Drawings

The accompanying drawings, used to provide further understanding of examples of the disclosure, constitute part of the description, and serve to explain the examples of the disclosure along with the following particular embodiments, instead of limiting the examples of the disclosure. In the accompanying drawings:

Fig. 1 is a flowchart of steps of a method for detecting a fault of mechanical equipment according to an embodiment of the disclosure; and

Fig. 2 is a structural diagram of a system for detecting a fault of mechanical equipment according to an embodiment of the disclosure.

**Detailed Description of the Embodiments**

Particular embodiments of the disclosure are described in detail below in combination with the accompanying drawings. It should be understood that the particular embodiments described herein are merely to illustrate and explain the disclosure, and are not intended to limit the disclosure.

Mechanical equipment, a type of core power equipment for enterprise production, such as electric motor equipment and gear equipment is applied to the enterprise production in an extensive range. Since the stability of the equipment directly affects the stability of a production process, it is essential to inspect an operation state of the mechanical equipment during production. According to an existing fault detection technology for the mechanical equipment, a vibration state signal of the mechanical equipment is acquired principally through manual routine inspection, and then a fault of the mechanical equipment is detected based on the vibration signal acquired. In this way, it is common practice to pretrain a model with a feature signal acquired as an input parameter, and obtain a fault diagnosis result based on a training result. However, mechanical equipments exhibit diverse conditions attributable to variations in working contents, operational states, structural configurations, and working fluids. Consequently, the fault feature signals corresponding to distinct fault types demonstrate significant discrepancies in their characteristic patterns. If the fault is diagnosed based on features extracted from a variety of signals with huge differences through a single fixed model, it is difficult to ensure precision of the diagnosis result.

Aiming at low accuracy of an existing solution for detecting a fault of mechanical equipment, a new method for detecting a fault of mechanical equipment is provided in the solution of the disclosure. Signal feature differences between different fault types are fully considered, and the fault types with sharp differences are differentiated based on the easily-differentiable autocorrelation characteristics in the solution of the disclosure. Thus, the technical solution for differentiating the fault type based on the signal feature is realized, and the problem that a fault type of composite equipment cannot be differentiated according to an existing fault type differentiation solution based on a fault type is avoided. An adaptive diagnosis model is selected based on the differentiation result of the fault type. Thus, it is ensured that the diagnosis model selected is a fault detection model that adapts to a current signal feature rule, so that differentiated solutions for diagnosing faults of the mechanical equipment are realized, and precision of a fault diagnosis result is improved.

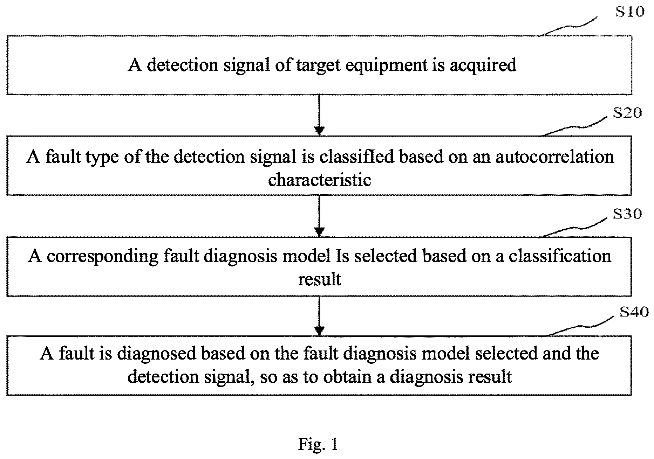

Fig. 1 is a flowchart of a method for detecting a fault of mechanical equipment according to an embodiment of the disclosure. As shown in Fig. 1, a method for detecting a fault of mechanical equipment is provided in an embodiment of the disclosure. The method includes S10-S40.

S10: a detection signal of target equipment is acquired.

Specifically, the solution of the disclosure aims to detect the fault based on a vibration signal or an acoustic signal. Since the acoustic signal and the vibration signal are waveform signals, and differ from each other in a normal working state and an abnormal working state of the mechanical equipment, the disclosure can be applicable to acoustic signal fault detection and vibration signal fault detection.

Preferably, the detection signal includes the acoustic signal and/or the vibration signal; and an operation process parameter of the target equipment; where the operation process parameter includes one or more of: operation temperature information, pressure information, flow information, or fixation mode information.

In an example of the disclosure, in addition to a special feature signal, the operation process parameter of the equipment is also required to be acquired in the solution of the disclosure. For example, the mechanical equipment may be a liquid tank alternatively. A liquid storage amount in the liquid tank will leads to a difference between signals generated by the equipment. During fault diagnosis, a signal difference caused by difference process states of the equipment must be prevented from being identified as a feature difference of a fault signal mistakenly. In view of the above, in the solution of the disclosure, the process parameter of the equipment must be taken as a reference element during model construction and subsequent diagnosis training, so that precision of an identification result is ensured.

It should be noted that the solution of the disclosure is theoretically applicable to any signal acquisition solution. An existing signal acquisition solution based on manual routine inspection or a signal acquisition solution based on a fixed or mobile sensor should theoretically fall within the scope of protection of the solution of the disclosure, as long as the signal feature of the target equipment can be accurately acquired.

S20: a fault type of the detection signal is classified based on an autocorrelation characteristic.

Preferably, the mechanical equipment is equipment provided with a moving component that generates a vibration signal and/or an acoustic signal during working.

Specifically, the mechanical equipment indicates process equipment having the moving component as a main acting component in a petrochemical production device. Generally, the mechanical equipment may be divided into fluid conveying machinery, heterogeneous separation machinery, stirring and mixing machinery, freezing machinery, crystallization and drying equipment, etc. The mechanical equipment specifically includes a centrifugal compressor, a rotary compressor, a piston compressor, a flue gas turbine, a steam turbine, a wind turbine, a centrifugal pump, a reciprocating pump, a gear pump, a vortex pump, a screw pump, a filter, a centrifuge, a crusher, a rotary kiln, a mixer, a rotary dryer, and other fluid conveying machinery etc. The solution of the disclosure can be applied to any equipment that generates the vibration signal and/or the acoustic signal during working, instead of being limited to a certain type of equipment. In order to better explain the technical solution of the disclosure, a mechanical fault and a fluid dynamics fault are described below, but the technical solution is not limited to these two fault types.

Preferably, the fault types include the mechanical fault and/or the fluid dynamics fault.

Specifically, the faults of the mechanical equipment are principally divided into two types. The first type is the mechanical fault type, such as common bearing damage, shaft misalignment, shaft imbalance, pump foundation looseness, and mechanical looseness. These mechanical fault types are often related to damage or change of structural properties of the mechanical equipment. In consequence, a friction state or a vibration state is changed, and an acoustic correspondingly generated principally includes a mechanical vibration acoustic and a friction acoustic. The other type is a fluid dynamics abnormality type. Mechanical power transmission and fluid power transmission are very common in a production workshop, and a fluid may also flow. In a case of a fault such as cavitation and turbulence in a fluid operation path, the fluid also generates a corresponding acoustic. Frequent cavitation faults will cause abnormal pump body vibration, inlet and outlet pressure pulsation, and noises of the centrifugal pump, which affects the pump performance, service life, and safety.

The mechanical equipment is a rolling bearing in most cases. An acoustic signal of the rolling bearing features serious signal modulation, a weak fault signal, a low signal-to-noise ratio, a wide signal frequency band, and high signal periodicity. A peak frequency of a noise radiated through rotation is often a multiple of a rotation speed of the centrifugal pump, and a signal is periodic. However, an acoustic signal radiated in a fluid dynamics abnormality working condition is random.

There is a big difference between noise features of the two fault types. In the solution of the disclosure, the fault types are identified according to the difference, so that corresponding methods for analyzing acoustic signals are specified for different fault types.

Preferably, the mechanical fault type includes any one of bearing damage, shaft misalignment, shaft imbalance, pump foundation looseness, and mechanical looseness; and the fluid dynamics abnormality type includes either one of cavitation and turbulence.

Preferably, the method further includes: an equipment type of the target equipment is identified; a feature of the detection signal of the target equipment is determined based on the equipment type; and a filter rule is determined based on the feature of the detection signal, and the detection signal of the target equipment is acquired based on the filter rule.

In the solution of the disclosure, the signal varies with the equipment type. For example, the signals of an electric motor and electric motor compound equipment with a storage tank have different features. In the solution of the disclosure, a corresponding solution for filter and acquisition is specified based on the difference, so that most noise signals that do not belong to a signal feature frequency band of the target equipment are filtered out.

Preferably, the equipment type includes: mechanical facility including reciprocating mechanical equipment and centrifugal mechanical equipment; and fluid mechanical equipment including gas medium equipment and liquid medium equipment.

Preferably, the step that a fault type of the detection signal is classified based on an autocorrelation characteristic includes: a degree of irregularity of the detection signal is obtained based on an autocorrelation of the detection signal, and the fault type of the equipment generating the current detection signal is determined based on the degree of irregularity; and a corresponding fault type diagnosis model is selected based on the determined fault type of the equipment.

Specifically, the step that a degree of irregularity of the detection signal is obtained based on an autocorrelation of the detection signal includes: a detection signal segment of a period of time is intercepted from the detection signal, and time shift processing is performed on the detection signal segment according to a preset time shift, so as to obtain a corresponding time-shifted signal; an autocorrelation function is constructed based on the detection signal segment and the corresponding time-shifted signal; entropy of the autocorrelation function is calculated; and a degree of irregularity of the detection signal segment is represented by the entropy of the autocorrelation function of the detection signal segment; where the smaller the entropy of the autocorrelation function is, the greater the degree of irregularity is.

Specifically, an expression formula of the autocorrelation function is as follows:

$$R_x(\tau) = \int_{-\infty}^{+\infty} x(t)x(t-\tau)\,dt$$

In the formula, t denotes a signal acquisition time; $\tau$ denotes the time shift; $x(t)$ denotes the detection signal at the time t within a current period of time; and $x(t-\tau)$ denotes the time-shifted signal of the detection signal at the time t within the current period of time. A calculation formula of the entropy of the autocorrelation function is as follows:

$$H = -c\sum_{x=1}^{n} R_x(\tau) * \log\left(R_x(\tau)\right)$$

In the formula, c denotes a preset constant; and H denotes the entropy of the autocorrelation function.

Example 1

Autocorrelated signals of an acoustic signal are cross-correlated with themselves at different time points. A corresponding autocorrelation function is a function of a similarity between two signals observed and a time difference therebetween. The function serves as a mathematical tool for finding a repetitive pattern (such as periodic signals masked by noises), or identifying disappeared fundamental frequencies hidden in harmonic frequencies of the signal. The function is often used in signal processing, so as to analyze functions or series of values, such as time-domain signals. In the solution of the disclosure, whether the acoustic signal has regularity is determined through the autocorrelation function. Specifically, an acoustic signal segment of a period of time is intercepted, and time shift processing is performed on the acoustic signal segment according to a preset time shift, so as to obtain a corresponding time-shifted signal; an autocorrelation function is constructed based on the acoustic signal segment and the corresponding time-shifted signal; entropy of the autocorrelation function is calculated; and a degree of irregularity of the corresponding acoustic signal is represented by the entropy of the autocorrelation function; where the smaller the entropy of the autocorrelation function is, the greater the degree of irregularity of the corresponding acoustic signal is. The entropy indicates a "degree of inherent disorder" of a system in essence. In the field of signal processing, the entropy may represent the degree of irregularity of the signal. The smaller the entropy is, the greater the corresponding degree of irregularity is, and the lower the possibility that the signal has regularity is. The degree of irregularity of the signal is represented by the calculated entropy of the autocorrelation function. An expression formula of the autocorrelation function is:

$$R_x(\tau) = \int_{-\infty}^{+\infty} x(t)x(t-\tau)dt$$

In the formula, t denotes a signal acquisition time; $\tau$ denotes the time shift; $x(t)$ denotes the acoustic signal at the time t; and $x(t - \tau)$ denotes the time-shifted signal of the acoustic signal at the time t. A calculation formula of the entropy of the autocorrelation function is as follows:

$$H = -c\sum_{x=1}^{n} R_x(\tau) * \log(R_x(\tau))$$

In the formula, c denotes a preset constant; and H denotes the entropy of the autocorrelation function.

An entropy threshold may be calibrated based on historical data statistics and experience of relevant personnel. The calibration standard is that an entropy not greater than the entropy threshold generally indicates the fluid dynamics abnormality type, and an entropy greater than the entropy threshold generally indicates the mechanical fault type. In view of the above, the entropy of the autocorrelation function of the acoustic signal is compared with a preset entropy threshold. The mechanical fault type is taken as the fault type of the equipment generating the current acoustic signal in a case that the entropy of the autocorrelation function is not greater than the preset entropy threshold; where the mechanical fault type includes any one of bearing damage, shaft misalignment, shaft imbalance, pump foundation looseness, and mechanical looseness. The fluid dynamics abnormality type is taken as the fault type of the equipment generating the current acoustic signal in a case that the entropy of the autocorrelation function is greater than the preset entropy threshold; where the fluid dynamics abnormality type includes either one of cavitation and turbulence.

S30: a corresponding fault diagnosis model is selected based on a classification result.

Specifically, after the signal type is differentiated, the adaptive fault diagnosis model may be selected based on a signal differentiation result.

Example 2

Preferably, in order to satisfy use demand, a corresponding fault identification model is directly invoked during subsequent fault identification, and a mechanical fault identification model needs to be pre-trained. A large number of historical operation data are screened at first, so as to select operation data calibrated as mechanical faults. Then, a mechanical fault type and a historical acoustic signal acquired corresponding to each piece of operation data are obtained. Certainly, the solution is suitable for a production workshop in which a fault identification solution has been performed based on acoustic monitoring, and corresponding acoustic feature signals have been recorded. If there is no acoustic monitoring signal, equipment with mechanical faults is calibrated. Then, the equipment calibrated as each mechanical fault type is operated, and acoustic feature information is acquired.

The fused analysis of singular spectrum and higher-order spectrum is performed on the acoustic feature acquired, and a corresponding feature is extracted. The singular spectrum analysis, a powerful method, has emerged in recent years for research on nonlinear time sequence data. A trajectory matrix is constructed according to time sequences observed, and then is decomposed and re-constructed, so that signals representing different components of original time sequences, such as long-term trend signals, periodic signals, and noise signals, are extracted. Structures of the time sequences are analyzed for further prediction. The higher-order spectrum is an expression form of higher-order statistics that is a generalized definition of statistical methods having a statistical feature order greater than 2. The higher-order statistics, a type of nonlinear signal processing tool, can reflect a higher-order relevant nonlinear relation.

In the example of the disclosure, the singular spectrum analysis mainly takes a role in spectral line smoothness and a degree of collapse. Compared with a feature extraction method through a singular spectrum only, the singular spectrum and higher-order spectrum fused feature extraction method has better spectral smoothness, faster attenuation, and a more obvious collapse phenomenon at a same embedding dimension (in a case of a large amount of noises). In other words, a dimensional feature can be better reflected. In view of the above, the higher-order spectrum and singular spectrum fused feature extraction solution has a better feature extraction effect and higher robustness.

After the singular spectrum and higher-order spectrum fused analysis, intensity and a phase feature of denoised higher-order spectrum data in a frequency domain are extracted. Then, a mechanical fault type identification model is trained with the intensity and the phase feature as input parameters and the corresponding fault type as guide output. When the training sample size is larger, the effect of the model obtained through corresponding training better satisfies an expectation. After the model is trained, some unused training sample data are re-selected to test the model, so as to determine whether the model training result satisfies an expectation. If the expectation is satisfied, the model obtained through training can be used as the mechanical fault identification model for subsequent use.

Example 3

Further, since an acoustic signal of the fluid dynamics abnormality type has high randomness, processing and analysis of a fluid noise is relatively complex, and it is difficult to realize accurate identification through manual feature extraction. In order to better extract a feature of the acoustic signal of the fluid dynamics abnormality type, a method for processing a fluid noise based on a spectral image vision model is provided in the solution of the disclosure. A spectral diagram is simply interpreted as a frequency distribution diagram, and complex signals are principally reflected by signals encompassing different frequency components. Simply, unordered signals are transformed into ordered signals through Fourier transform, and then the ordered signals are visualized based on the spectral diagram. Since the acoustic signal acquired is a type of complex signal, in the complex signal, there are a variety of signal frequencies encompassed, rather than a single one.

Preferably, in the solution of the disclosure, the acoustic signal is processed through short-time Fourier transform. The short-time Fourier transform, a general tool for voice signal processing, defines a very useful time-frequency distribution class, so that a complex amplitude of any signal changing along with time and frequency is specified. In practice, a calculation process of the short-time Fourier transform is to divide a long time signal into shorter segments having a same length, and apply the Fourier transform to each shorter segment, i.e. obtain a Fourier spectrum. Since the method for constructing a spectral image model based on the short-time Fourier transform is available at present, an implementation process of the method is not repeated herein. After the acoustic signal is processed into a spectral signal, the spectral signal is taken as an input parameter of the corresponding fault identification model. The fault identification model is constructed based on two-dimensional convolution, and the construction method for the model is similar to the construction solution for the mechanical fault type identification model. In other words, the model is trained by acquiring a large number of historical data and existing calibration data. Certainly, the corresponding training sample data also need to be processed into a corresponding spectral image model.

Preferably, in the training process of the fault identification model, frequency domain information is directly disturbed through an image data enhancement method. A frequency shift, torsion, masking, etc. are performed on the spectral image having a certain time step, so that the identification model is enabled to make a fine-grained expression. Thus, a disturbance information processing capacity of the model is enhanced, and generalization performance of the model is improved.

S40: the fault is diagnosed based on the fault diagnosis model selected and the detection signal, so as to obtain a diagnosis result.

Specifically, entropy of an autocorrelation function of a detection signal segment is compared with a preset entropy threshold. A mechanical fault type is taken as a fault type of the equipment generating the detection signal segment in a case that the entropy of the autocorrelation function is not greater than the preset entropy threshold. A fluid dynamics abnormality type is taken as a fault type of the equipment generating the detection signal segment in a case that the entropy of the autocorrelation function is greater than the preset entropy threshold. When a current fault type diagnosis model is a mechanical fault diagnosis model, a step that a feature is extracted from the detection signal, so as to obtain feature information includes: singular spectrum and higher-order spectrum fused analysis is performed on the detection signal, so as to obtain analyzed data as the feature. When a current fault type diagnosis model is a fluid dynamics fault diagnosis model, a step that a feature is extracted from the detection signal, so as to obtain feature information includes: short-time Fourier transform is performed on the detection signal, so as to obtain a corresponding spectral image as the feature.

Specifically, a step that the fault diagnosis model selected is trained based on the feature, and faulty equipment is identified based on a training result includes: the mechanical fault diagnosis model is trained with the feature and the operation process parameter as input parameters, and the training result obtained is taken as a mechanical fault type analysis result. Alternatively, the fluid dynamics fault diagnosis model is trained with the feature and the operation process parameter as input parameters, and the training result obtained is taken as a fluid dynamics abnormality type analysis result. A training process of a fluid dynamics abnormality identification model is disturbed based on an image data enhancement method.

Example 4

Acoustic field nephogram information of each frequency band is obtained in each acoustic frequency segment, and the acoustic field nephogram information of each frequency band is compared with preset standard acoustic field nephogram information, so as to obtain an acoustic field nephogram deviation of each frequency band. A total deviation matrix is obtained based on the acoustic field nephogram deviation of each frequency band. A preset acoustic field fault identification model is trained with the total deviation matrix as an input parameter, so as to obtain an equipment abnormality result under a current working condition. The equipment abnormality result obtained based on the acoustic field fault identification model is compared with an equipment abnormality result obtained based on the fault diagnosis model so that the equipment abnormality result obtained based on the fault diagnosis model is verified.

Specifically, whether it is a mechanical fault type identification result or a fluid dynamics abnormality type identification result, fault type information of the acoustic generated is finally inferred based on corresponding acoustic feature information. The fault type information is directly pushed to a user terminal, so as to assist the user in the corresponding fault identification and check.

Preferably, in order to further ensure accuracy of the fault identification result, a solution for verifying a fault diagnosis result is further provided in the solution of the disclosure. Acoustic field nephogram information of each frequency band is obtained in each acoustic frequency segment, and the acoustic field nephogram information of each frequency band is compared with preset standard acoustic field nephogram information, so as to obtain an acoustic field nephogram deviation of each frequency band. A total deviation matrix is obtained based on the acoustic field nephogram deviation of each frequency band. A preset acoustic field fault identification model is trained with the total deviation matrix as an input parameter, so as to obtain an equipment abnormality result under a current working condition. The equipment abnormality result obtained based on the acoustic field fault identification model is compared with an equipment abnormality result obtained based on the fault diagnosis model, so that the equipment abnormality result obtained based on the fault diagnosis model is verified.

Specifically, due to superposition performance of acoustic propagation, noises in a complex field environment are often formed by superposing a plurality of acoustic sources. The change in spectral feature of an acoustic generated by the acoustic source, the change in spatial distribution of the acoustic source, and the increase and decrease in number of the acoustic sources will change an acoustic waveform acquired at a fixed detection point. In view of the above, in the verification solution provided by the disclosure, noise audio data and acoustic field video data of an inspected object are acquired based on an acoustic imaging technology. Acoustic spectral features and distribution states within a full-frequency range are comprehensively determined through identification and determination of sub-frequency bands. Thus, multi-type abnormal work identification and visual location can be realized more comprehensively, accurately, and intuitively.

Specifically, it is required to acquire the fault identification result of the comparison solution at first. Then, the two fault identification results are compared with each other. If a difference between the two fault identification results satisfies an expectation, it indicates that the fault identification result satisfies the expectation. If a difference between the two fault identification results is out of an expectation, it indicates that one solution has an identification error. In order to ensure precision of identification, it is required to re-identify the fault.

It is required to construct the corresponding fault identification model based on the acoustic field at first in a process of obtaining the result of the comparison solution. When the equipment and devices on site are in a normal operation working condition, a sample library for the normal operation working condition is created through video and audio signals acquired and recorded by the acoustic imaging apparatus. The steps are as follows:

First, a total frequency range [Φmin,Φmax] for acoustic analysis is selected, where Φmax is not greater than 1/2 of a sampling frequency of a microphone. Then, N feature frequency ranges are selected according to noise frequency features in an abnormal working condition of a target, and the total frequency range [Φmin,Φmax] is divided into N ranges, where all the frequency ranges are [Φ1,Φ2], [Φ2,Φ3]..., and [Φ N-1,ΦN] respectively, Φ1=Φmin, and ΦN=Φmax. Finally, a first acoustic frequency range [Φ1,Φ2] is set, and an acoustic field distribution nephogram is calculated. A maximum acoustic source point coordinate $\gamma1[x1,y1]$ is recorded. The acoustic frequency range is further changed to a second acoustic frequency range, a third acoustic frequency range..., and an Nth acoustic frequency range, and the above steps are repeated, so as to obtain sub-frequency band acoustic source point coordinates $\gamma2[x2,y2]$, y3[x3,y3]..., and yN[xN,yN]. An acoustic energy signal $s(t)$ of a microphone in a microphone array is acquired and stored, and an acoustic signal undergoes Fourier transform, and then is intercepted, so as to obtain spectral density $s(w)$ in the frequency range [Φmin,Φmax]. Total spectral density is filtered according to the N frequency ranges previously set, so as to obtain N pieces of feature spectral density $s_1(w)$, $s_2(w),\cdots, s_N(w)$. A maximum acoustic source point

coordinate $\gamma_i[x_i, y_i]$ and the feature spectral density $s_i(w)$ are stored as acoustic feature parameters of an ith frequency band, where i=1, 2, 3,..., and N. An unsupervised identification model is trained and constructed with each piece of feature spectral density $s_i(w)$ as input. The sample library for the normal operation working condition is created with the acoustic feature parameter of each frequency band, the unsupervised identification model, and the acoustic field nephogram video as data.

After the sample library for the normal operation working condition is acquired, in a case of an abnormal operation working condition or a simulation experiment of the abnormal working condition performed with a simulation experiment device, an abnormal working condition identification model is trained with the video and audio signals acquired and recorded by the acoustic imaging apparatus. The steps are as follows:
A spectral density sequence $s_1(w)$ within the first frequency range [$\Phi1,\Phi2$] for acoustic analysis is selected and input into the unsupervised identification model trained, frequency density $s'_{out}(w)$ is output, and a spectral deviation rate

$$\theta_{s1} = \sum\nolimits_{w=\Phi'_1}^{\Phi'_2} \left| s'_{out}(w) - s'(w) \right|$$ is calculated.
A maximum acoustic source point coordinate

$$\gamma'_i\left[ x'_i, y'_i \right]$$ in the acoustic field nephogram is acquired, and compared a normal coordinate point $\gamma_i[x_i, y_i]$ within a corresponding frequency range in the sample library for the normal working condition, and an acoustic source coordinate deviation

$$\theta_{\gamma1} = \sqrt{\left( x'_i - x_i \right)^2 + \left( y'_i - y_i \right)^2}$$ is calculated.
An acoustic field nephogram video actually measured is acquired, and compared with an acoustic field nephogram picture in the sample library for the normal working condition frame by frame in terms of image similarity. A mean of similarities of all videos is calculated as an acoustic field nephogram deviation $\theta_{\lambda1}$. A deviation matrix $\theta_1 = [\theta_{s1}, \theta_{\gamma1}, \theta_{\lambda1}]$ of the first frequency range is obtained by combining, the second frequency range to an Mth frequency range are selected in sequence, and the above steps are repeated, so as to obtain a total deviation matrix by summarization.

$$\theta = \begin{bmatrix} \theta_{s1} & \theta_{s2} & \theta_{sN} \\ \theta_{\gamma1} & \theta_{\gamma2} \cdots \theta_{\gamma N} \\ \theta_{\lambda1} & \theta_{\lambda2} & \theta_{\lambda N} \end{bmatrix}$$

The abnormal working condition identification model is trained and constructed with the total deviation matrix as input and a type number of the abnormal working condition as output.

After acquired, the preset acoustic field fault identification model is trained with the total deviation matrix as an input parameter, so as to obtain the equipment abnormality result under the current working condition. The equipment abnormality result obtained based on the acoustic field fault identification model is compared with the equipment abnormality result obtained based on the fault diagnosis model. The equipment abnormal result obtained based on the current fault diagnosis model is verified. A final fault diagnosis result is determined after consistency verification of the two abnormality results is passed.

Example 5

A plurality of fault types are manually calibrated, including bearing wear, misalignment, imbalance, mechanical loosening, shaft displacement, foundation loosening, cavitation, and turbulence. For same mechanical equipment, only one fault type is calibrated at a time. Under each fault type, 200 groups of data are acquired in different time periods and backgrounds. Finally, 200 groups of data are provided for each fault type, there are 1600 groups of data in total, and each group of data include an acoustic signal and a vibration signal. It is further noted that the 1600 groups of data include data acquired at a plurality of preset points, and distances and orientations of the preset points with respect to the mechanical equipment are different. With these data as comparative samples, a plurality of comparative examples are formed as follows:

Comparative Example 1: the fault type of each group of data is hidden, and all data are randomly combined, so as to obtain data group sequences with unknown fault types and unordered sequence numbers. Fault detection is performed by a simulated fault diagnosis model based on the vibration signal, so as to obtain a diagnosed fault type of each group of data. Then, the fault type hidden and corresponding to the data is displayed, and compared with the diagnosed fault type, so as to obtain 1420 groups of data each having the identical fault types.

Comparative Example 2:
The fault type of each group of data is hidden, and all data are randomly combined, so as to obtain data group sequences with unknown fault types and unordered sequence numbers. Fault detection is performed by a simulated fault diagnosis model for fault type differentiation based on an acoustic signal feature, so as to obtain a diagnosed fault type of each group of data. Then, the fault type hidden and corresponding to the data is displayed, and compared with the diagnosed fault type, so as to obtain 1532 groups of data each having the identical fault types.

Comparative Example 3:

The fault type of each group of data is hidden, and all data are randomly combined, so as to obtain data group sequences with unknown fault types and unordered sequence numbers. Fault detection is performed by a simulated fault diagnosis model for fault type differentiation based on an acoustic signal feature, so as to obtain a diagnosed fault type of each group of data, and a detection result is corrected based on an acoustic field nephogram deviation of each frequency band. A corrected detection result is compared with an original result, so as to obtain 1551 groups of data each having the identical fault types.

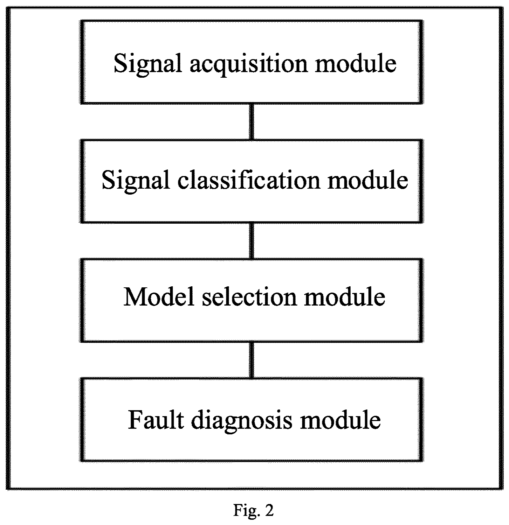

Fig. 2 is a structural diagram of a device for detecting a fault of mechanical equipment according to an embodiment of the disclosure. As shown in Fig. 2, a device for detecting a fault of mechanical equipment is provided in an embodiment of the disclosure. The device includes: a signal acquisition module, a signal classification module, model selection module and fault diagnosis module.

The signal acquisition module is configured to acquire a detection signal of target equipment.

Specifically, the solution of the disclosure aims to detect the fault based on a vibration signal or an acoustic signal. Since the acoustic signal and the vibration signal are waveform signals, and differ from each other in a normal working state and an abnormal working state of the mechanical equipment, the disclosure can be applicable to acoustic signal fault detection and vibration signal fault detection.

Preferably, the detection signal includes the acoustic signal and/or the vibration signal; and an operation process parameter of the target equipment; where the operation process parameter includes one or more of: operation temperature information, pressure information, flow information, or fixation mode information.

In an example of the disclosure, in addition to a special feature signal, the operation process parameter of the equipment is also required to be acquired in the solution of the disclosure. For example, the mechanical equipment may be configured with a liquid tank alternatively. A liquid storage amount in the liquid tank will leads to a difference between signals generated by the equipment. During fault diagnosis, a signal difference caused by difference process states of the equipment must be prevented from being identified as a feature difference of a fault signal mistakenly. In view of the above, in the solution of the disclosure, the process parameter of the equipment must be taken as a reference element during model construction and subsequent diagnosis training, so that precision of an identification result is ensured.

It should be noted that the solution of the disclosure is theoretically applicable to any signal acquisition solution. An existing signal acquisition solution based on manual routine inspection or a signal acquisition solution based on a fixed or mobile sensor should theoretically fall within the scope of protection of the solution of the disclosure, as long as the signal feature of the target equipment can be accurately acquired.

The signal classification module is configured to classify a fault type of the detection signal based on an autocorrelation characteristic.

Specifically, the fault types include a mechanical fault and/or a fluid dynamics fault.

Specifically, the faults of the mechanical equipment are principally divided into two types. The first type is a mechanical fault type, such as common bearing damage, shaft misalignment, shaft imbalance, pump foundation looseness, and mechanical looseness. These mechanical fault types are often related to damage or change of structural properties of the mechanical equipment. In consequence, a friction state or a vibration state is changed, and an acoustic correspondingly generated principally includes a mechanical vibration acoustic and a friction acoustic. The other type is a fluid dynamics abnormality type. Mechanical power transmission and fluid power transmission are very common in a production workshop, and a fluid may also flow. In a case of a fault such as cavitation and turbulence in a fluid operation path, the fluid also generates a corresponding acoustic.

Frequent cavitation faults will cause abnormal pump body vibration, inlet and outlet pressure pulsation, and noises of a centrifugal pump, which affects the pump performance, service life, and safety.

The mechanical equipment is a rolling bearing in most cases. An acoustic signal of the rolling bearing features serious signal modulation, a weak fault signal, a low signal-to-noise ratio, a wide signal frequency band, and high signal periodicity. A peak frequency of a noise radiated through rotation is often a multiple of a rotation speed of the centrifugal pump, and a signal is periodic. However, an acoustic signal radiated in a fluid dynamics abnormality working condition is random. There is a big difference between noise features of the two fault types. In the solution of the disclosure, the fault types are identified according to the difference, so that corresponding methods for analyzing acoustic signals are specified for different fault types.

Preferably, the mechanical fault type includes any one of bearing damage, shaft misalignment, shaft imbalance, pump foundation looseness, and mechanical looseness; and the fluid dynamics abnormality type includes either one of cavitation and turbulence.

Preferably, the signal classification module is further configured to identify an equipment type of the target equipment; determine a feature of the detection signal of the target equipment based on the equipment type; and determine a filter rule based on the feature of the detection signal, and acquire the detection signal of the target equipment based on the filter rule.

In the solution of the disclosure, the signal varies with the equipment type. For example, the signals of an electric motor and electric motor compound equipment with a storage tank have different features. In the solution of the disclosure, a corresponding solution for filter and acquisition is specified based on the difference, so that most noise signals that do not belong to a signal feature frequency band of the target equipment are filtered out.

Preferably, the equipment type includes: mechanical facility including reciprocating mechanical equipment and centrifugal mechanical equipment; and fluid mechanical equipment including gas medium equipment and liquid medium equipment.

Preferably, the step of classifying a fault type of the detection signal based on an autocorrelation characteristic includes: a degree of irregularity of the detection signal is obtained based on an autocorrelation of the detection signal, and the fault type of the equipment generating the current detection signal is determined based on the degree of irregularity; and a corresponding fault type diagnosis model is selected based on the determined fault type of the equipment.

Specifically, the step that a degree of irregularity of the detection signal is obtained based on an autocorrelation of the detection signal includes: a detection signal segment of a period of time is intercepted from the detection signal, and time shift processing is performed on the detection signal segment according to a preset time shift, so as to obtain a corresponding time-shifted signal; an autocorrelation function is constructed based on the detection signal segment and the corresponding time-shifted signal; entropy of the autocorrelation function is calculated; and a degree of irregularity of the detection signal segment is represented by the entropy of the autocorrelation function of the detection signal segment; where the smaller the entropy of the autocorrelation function is, the greater the degree of irregularity is.

Specifically, an expression formula of the autocorrelation function is as follows:

$$R_x\left(\tau\right)=\int_{-\infty}^{+\infty}x\left(t\right)x\left(t-\tau\right)dt$$

In the formula, t denotes a signal acquisition time; $\tau$ denotes the time shift; $x(t)$ denotes the detection signal at the time t within a current period of time; and $x(t-\tau)$ denotes the time-shifted signal of the detection signal at the time t within the current period of time. A calculation formula of the entropy of the autocorrelation function is as follows:

$$H=-c\sum_{x=1}^{n}R_x\left(\tau\right)*\log\left(R_x\left(\tau\right)\right)$$

In the formula, c denotes a preset constant; and H denotes the entropy of the autocorrelation function.

Autocorrelated signals of an acoustic signal are cross-correlated with themselves at different time points.

A corresponding autocorrelation function is a function of a similarity between two signals observed and a time difference therebetween. The function serves as a mathematical tool for finding a repetitive pattern (such as periodic signals masked by noises), or identifying disappeared fundamental frequencies hidden in harmonic frequencies of the signal. The function is often used in signal processing, so as to analyze functions or series of values, such as time-domain signals. In the solution of the disclosure, whether the acoustic signal has regularity is determined through the autocorrelation function. Specifically, an acoustic signal segment of a period of time is intercepted, and time shift processing is performed on the acoustic signal segment according to a preset time shift, so as to obtain a corresponding time-shifted signal; an autocorrelation function is constructed based on the acoustic signal segment and the corresponding time-shifted signal; entropy of the autocorrelation function is calculated; and a degree of irregularity of the corresponding acoustic signal is represented by the entropy of the autocorrelation function; where the smaller the entropy of the autocorrelation function is, the greater the degree of irregularity of the corresponding acoustic signal is. The entropy indicates a "degree of inherent disorder" of a system in essence. In the field of signal processing, the entropy may indicate the degree of irregularity of the signal. The smaller the entropy is, the greater the corresponding degree of irregularity is, and the lower the possibility that the signal has regularity is. The degree of irregularity of the signal is represented by the calculated entropy of the autocorrelation function. An expression formula of the autocorrelation function is:

$$R_x\left(\tau\right)=\int_{-\infty}^{+\infty}x\left(t\right)x\left(t-\tau\right)dt$$

In the formula, t denotes a signal acquisition time; $\tau$ denotes the time shift; $x(t)$ denotes the acoustic signal at the time t; and $x(t-\tau)$ denotes the time-shifted signal of the acoustic signal at the time t. A calculation formula of the entropy of the autocorrelation function is as follows:

$$H=-c\sum_{x=1}^{n}R_x\left(\tau\right)*\log\left(R_x\left(\tau\right)\right)$$

In the formula, c denotes a preset constant; and H denotes the entropy of the autocorrelation function.

An entropy threshold may be calibrated based on historical data statistics and experience of relevant personnel. The calibration standard is that an entropy not greater than the entropy threshold generally indicates the fluid dynamics abnormality type, and an entropy greater than the entropy threshold generally indicates the mechanical fault type. In view of the above, the entropy of the autocorrelation function of the acoustic signal is compared with a preset entropy threshold. The mechanical fault type is taken as the fault type of the equipment generating the current acoustic signal in a case that the entropy of the autocorrelation function is not greater than the preset entropy threshold; where the mechanical fault type includes any one of bearing damage, shaft misalignment, shaft imbalance, pump foundation looseness, and mechanical looseness. The fluid dynamics abnormality type is taken as the fault type of the equipment generating the current acoustic signal in a case that the entropy of the autocorrelation function is greater than the preset entropy threshold; where the fluid dynamics abnormality type includes either one of cavitation and turbulence.

The device further includes a model selection module configured to select a corresponding fault diagnosis model based on a classification result.

Specifically, after the signal type is differentiated, the adaptive fault diagnosis model may be selected based on a signal differentiation result.

Preferably, in order to satisfy use demand, a corresponding fault identification model is directly invoked during subsequent fault identification, and a mechanical fault identification model needs to be pretrained. A large number of historical operation data are screened at first, so as to select operation data calibrated as mechanical faults. Then, a mechanical fault type and a historical acoustic signal acquired corresponding to each piece of operation data are obtained. Certainly, the solution is suitable for a production workshop in which a fault identification solution has been performed based on acoustic monitoring, and corresponding acoustic feature signals have been recorded. If there is no acoustic monitoring signal, equipment with mechanical faults is calibrated. Then, the equipment calibrated as each mechanical fault type is operated, and acoustic feature information is acquired. Singular spectrum and higher-order spectrum fused analysis is performed on the acoustic feature information acquired, and a corresponding feature is extracted. The singular spectrum analysis, a powerful method, has emerged in recent years for research on nonlinear time sequence data. A trajectory matrix is constructed according to time sequences observed, and then is decomposed and re-constructed, so that signals representing different components of original time sequences, such as long-term trend signals, periodic signals, and noise signals, are extracted. Structures of the time sequences are analyzed for further prediction. The higher-order spectrum is an expression form of higher-order statistics that is a generalized definition of statistical methods having a statistical feature order greater than 2. The higher-order statistics, a type of nonlinear signal processing tool, can reflect a higher-order relevant nonlinear relation.

In the example of the disclosure, the singular spectrum analysis mainly takes a role in spectral line smoothness and a degree of collapse. Compared with a feature extraction method through a singular spectrum only, the singular spectrum and higher-order spectrum fused feature extraction method has better spectral smoothness, faster attenuation, and a more obvious collapse phenomenon at a same embedding dimension (in a case of a large amount of noises). In other words, a dimensional feature can be better reflected. In view of the above, the higher-order spectrum and singular spectrum fused feature extraction solution has a better feature extraction effect and higher robustness.

After the singular spectrum and higher-order spectrum fused analysis, intensity and a phase feature of denoised higher-order spectrum data in a frequency domain are extracted. Then, a mechanical fault type identification model is trained with the intensity and the phase feature as input parameters and the corresponding fault type as guide output. When the training sample size is larger, the effect of the model obtained through corresponding training better satisfies an expectation. After the model is trained, some unused training sample data are re-selected to test the model, so as to determine whether the model training result satisfies an expectation. If the expectation is satisfied, the model obtained through training can be used as the mechanical fault identification model for subsequent use.

Further, since an acoustic signal of the fluid dynamics abnormality type has high randomness, processing and analysis of a fluid noise is relatively complex, and it is difficult to realize accurate identification through manual feature extraction. In order to better extract a feature of the acoustic signal of the fluid dynamics abnormality type, a method for processing a fluid noise based on a spectral image vision model is provided in the solution of the disclosure. A spectral diagram is simply interpreted as a frequency distribution diagram, and complex signals are principally reflected by signals encompassing different frequency components. Simply, unordered signals are transformed into ordered signals through Fourier transform, and then the ordered signals are visualized based on the spectral diagram. Since the acoustic signal acquired is a type of complex signal, in the complex signal, there are a variety of signal frequencies encompassed, rather than a single one.

Preferably, in the solution of the disclosure, the acoustic signal is processed through short-time Fourier transform. The short-time Fourier transform, a general tool for voice signal processing, defines a very useful time-frequency distribution class, so that a complex amplitude of any signal changing along with time and frequency is specified. In practice, a calculation process of the short-time Fourier transform is to divide a long time signal into shorter segments having a same length, and apply the Fourier transform to each shorter segment, i.e. obtain a Fourier spectrum. Since the method for constructing a spectral image model based on the short-time Fourier transform is available at present, an implementation process of the method is not repeated herein. After the acoustic signal is processed into a spectral signal, the spectral signal is taken as an input parameter of the corresponding fault identification model. The fault identification model is constructed based on two-dimensional convolution, and the construction method for the model is similar to the construction solution for the mechanical fault type identification model. In other words, the model is trained by acquiring a large number of historical data and existing calibration data. Certainly, the corresponding training sample data also need to be processed into a corresponding spectral image model.

Preferably, in the training process of the fault identification model, frequency domain information is directly disturbed through an image data enhancement method. A frequency shift, torsion, masking, etc. are performed on the spectral image having a certain time step, so that the identification model is enabled to make a fine-grained expression. Thus, a disturbance information processing capacity of the model is enhanced, and generalization performance of the model is improved.

The device further includes a fault diagnosis module configured to diagnose the fault based on the fault diagnosis model selected and the detection signal, so as to obtain a diagnosis result.

Specifically, entropy of an autocorrelation function of a detection signal segment is compared with a preset entropy threshold. A mechanical fault type is taken as a fault type of the equipment generating the detection signal segment in a case that the entropy of the autocorrelation function is not greater than the preset entropy threshold. A fluid dynamics abnormality type is taken as a fault type of the equipment generating the detection signal segment in a case that the entropy of the autocorrelation function is greater than the preset entropy threshold. When a current fault type diagnosis model is a mechanical fault diagnosis model, the step that a feature is extracted from the detection signal, so as to obtain feature information includes: singular spectrum and higher-order spectrum fused analysis is performed on the detection signal, so as to obtain analyzed data as the feature. When a current fault type diagnosis model is a fluid dynamics fault diagnosis model, the step that a feature is extracted from the detection signal, so as to obtain feature information includes: short-time Fourier transform is performed on the detection signal, so as to obtain a corresponding spectral image as the feature.

Specifically, the step that the fault diagnosis model selected is trained based on the feature, and faulty equipment is identified based on a training result includes: the mechanical fault diagnosis model is trained with the feature and the operation process parameter as input parameters, and the training result obtained is taken as a mechanical fault type analysis result. Alternatively, the fluid dynamics fault diagnosis model is trained with the feature and the operation process parameter as input parameters, and the training result obtained is taken as a fluid dynamics abnormality type analysis result. A training process of a fluid dynamics abnormality identification model is disturbed based on an image data enhancement method.

Acoustic field nephogram information of each frequency band is obtained in each acoustic frequency segment, and the acoustic field nephogram information of each frequency band is compared with preset standard acoustic field nephogram information, so as to obtain an acoustic field nephogram deviation of each frequency band. A total deviation matrix is obtained based on the acoustic field nephogram deviation of each frequency band. A preset acoustic field fault identification model is trained with the total deviation matrix as an input parameter, so as to obtain an equipment abnormality result under a current working condition. The equipment abnormality result obtained based on the acoustic field fault identification model is compared with an equipment abnormality result obtained based on the fault diagnosis model, so that the equipment abnormality result obtained based on the fault diagnosis model is verified.

Specifically, whether it is a mechanical fault type identification result or a fluid dynamics abnormality type identification result, fault type information of the acoustic generated is finally inferred based on corresponding acoustic feature information. The fault type information is directly pushed to a user terminal, so as to assist the user in the corresponding fault identification and check.

Preferably, in order to further ensure accuracy of the fault identification result, a solution for verifying a fault diagnosis result is further provided in the solution of the disclosure. Acoustic field nephogram information of each frequency band is obtained in each acoustic frequency segment, and the acoustic field nephogram information of each frequency band is compared with preset standard acoustic field nephogram information, so as to obtain an acoustic field nephogram deviation of each frequency band. A total deviation matrix is obtained based on the acoustic field nephogram deviation of each frequency band. A preset acoustic field fault identification model is trained with the total deviation matrix as an input parameter, so as to obtain an equipment abnormality result under a current working condition. The equipment abnormality result obtained based on the acoustic field fault identification model is compared with an equipment abnormality result obtained based on the fault diagnosis model, so that the equipment abnormality result obtained based on the fault diagnosis model is verified.

Specifically, due to superposition performance of acoustic propagation, noises in a complex field environment are often formed by superposing a plurality of acoustic sources. The change in spectral feature of an acoustic generated by the acoustic source, the change in spatial distribution of the acoustic source, and the increase and decrease in number of the acoustic sources will change an acoustic waveform acquired at a fixed detection point. In view of the above, in the verification solution provided by the disclosure, noise audio data and acoustic field video data of an inspected object are acquired based on an acoustic imaging technology. Acoustic spectral features and distribution states within a full-frequency range are comprehensively determined through identification and determination of sub-frequency bands. Thus, multi-type abnormal work identification and visual location can be realized more comprehensively, accurately, and intuitively.

Specifically, it is required to acquire the fault identification result of the comparison solution at first. Then, the two fault identification results are compared with each other. If a difference between the two fault identification results satisfies an expectation, it indicates that the fault identification result satisfies the expectation. If a difference between the two fault identification results is out of an expectation, it indicates that one solution has an identification error. In order to ensure precision of identification, it is required to re-identify the fault.

A system for detecting a fault of mechanical equipment is further provided in the solution of the disclosure. The system includes the above device for detecting a fault of mechanical equipment.

A computer-readable storage medium is further provided in the embodiments of the disclosure. The computer-readable storage medium stores an instruction, where when run on a computer, the instruction causes the computer to execute the above method for detecting a fault of mechanical equipment.

Those skilled in the art can understand that all or some steps implementing the method in the above embodiment can be accomplished by instructing related hardware through a program. The program is stored in one storage medium and includes several instructions configured to enable a single-chip microcomputer, a chip, or a processor to execute all or some steps of the method in each embodiment of the disclosure. The foregoing storage medium includes various media capable of storing a program code, such as a universal serial bus (USB) flash disk, a mobile hard disk, a read-only memory (ROM), a random access memory (RAM), a magnetic disk, and an optical disk.

The optional embodiments of the disclosure are described in detail above with reference to the accompanying drawings. However, the embodiments of the disclosure are not limited to specific details in the above embodiments. Various simple variations can be made to the technical solutions in the embodiments of the disclosure within the scope of the technical concept in the embodiments of the disclosure, and these simple variations fall within the scope of protection in the embodiments of the disclosure. Also, it should be noted that various specific technical features described in the above particular embodiments can be combined in any suitable way without contradiction. In order to avoid unnecessary repetition, various possible combinations are not described in the embodiments of the disclosure separately.

In addition, various different embodiments of the disclosure can also be combined randomly without departing from the concept in the embodiments of the disclosure, and the combinations should also be deemed as contents disclosed in the embodiments of the disclosure.

## Claims

1. A method for detecting a fault of mechanical equipment, comprising:

   acquiring a detection signal of target equipment;
   classifying a fault type of the detection signal based on an autocorrelation characteristic;
   selecting a corresponding fault diagnosis model based on a classification result; and
   diagnosing the fault based on the fault diagnosis model selected and the detection signal, so as to obtain a diagnosis result.

2. The method according to claim 1, wherein the detection signal comprises: an acoustic signal and/or a vibration signal; and an operation process parameter of the target equipment; and the operation process parameter comprises one or more of: operation temperature information, pressure information, flow information, or fixation mode information.

3. The method according to claim 1, wherein the mechanical equipment is equipment provided with a moving component that generates a vibration signal and/or an acoustic signal during working.

4. The method according to claim 3, wherein the fault type comprises:
   a mechanical fault and/or a fluid dynamics fault.

5. The method according to claim 1, further comprising:

   identifying an equipment type of the target equipment;
   determining a feature of the detection signal of the target equipment based on the equipment type; and
   determining a filter rule based on the feature of the detection signal, and acquiring the detection signal of the target equipment based on the filter rule.

6. The method according to claim 5, wherein the equipment type comprises:

   mechanical facility, comprising reciprocating mechanical equipment and centrifugal mechanical equipment; and
   fluid mechanical equipment, comprising gas medium equipment and liquid medium equipment.

7. The method according to claim 4, wherein the classifying a fault type of the detection signal based on an autocorrelation characteristic comprises:

obtaining a degree of irregularity of the detection signal based on an autocorrelation of the detection signal, and determining the fault type of the equipment generating the current detection signal based on the degree of irregularity; and selecting a corresponding fault type diagnosis model based on a determined fault type of the equipment.

8. The method according to claim 7, wherein the obtaining a degree of irregularity of the detection signal based on an autocorrelation of the detection signal comprises:

    intercepting a detection signal segment of a period of time from the detection signal, and performing time shift processing on the detection signal segment according to a preset time shift, so as to obtain a corresponding time-shifted signal;
    constructing an autocorrelation function based on the detection signal segment and the corresponding time-shifted signal;
    calculating entropy of the autocorrelation function; and
    representing a degree of irregularity of the detection signal segment by the entropy of the autocorrelation function of the detection signal segment, wherein the smaller the entropy of the autocorrelation function is, the greater the degree of irregularity is.

9. The method according to claim 8, wherein an expression formula of the autocorrelation function is as follows:

$$R_x(\tau) = \int_{-\infty}^{+\infty} x(t) x(t - \tau) dt$$

    wherein t denotes a signal acquisition time;
    $\tau$ denotes the time shift;
    $x(t)$ denotes the detection signal at the time t within a current period of time; and
    $x(t - \tau)$ denotes the time-shifted signal of the detection signal at the time t within the current period of time; and
    a calculation formula of the entropy of the autocorrelation function is as follows:

$$H = -c \sum_{x=1}^{n} R_x(\tau) * \log\left(R_x(\tau)\right)$$

    wherein c denotes a preset constant; and
    H denotes the entropy of the autocorrelation function.

10. The method according to claim 8, wherein the determining the fault type of the equipment generating the current detection signal based on the degree of irregularity comprises:

    comparing the entropy of the autocorrelation function of the detection signal segment with a preset entropy threshold;
    taking a mechanical fault type as the fault type of the equipment generating the detection signal segment in a case that the entropy of the autocorrelation function is not greater than the preset entropy threshold; and
    taking a fluid dynamics abnormality type as the fault type of the equipment generating the detection signal segment in a case that the entropy of the autocorrelation function is greater than the preset entropy threshold.

11. The method according to claim 10, wherein in a case that a current fault type diagnosis model is a mechanical fault diagnosis model, the determining a feature of the detection signal of the target equipment based on the equipment type comprises:
performing fused analysis of singular spectrum and higher-order spectrum on the detection signal, so as to obtain analyzed data as the feature.

12. The method according to claim 10, wherein in a case that a current fault type diagnosis model is a fluid dynamics fault diagnosis model, the determining a feature of the detection signal of the target equipment based on the equipment type comprises:
performing short-time Fourier transform on the detection signal, so as to obtain a corresponding spectral image as the feature.

13. The method according to claim 10, wherein the diagnosing the fault based on the fault diagnosis model selected and the detection signal comprises:

    training a mechanical fault diagnosis model with the feature and the operation process parameter as input parameters, and taking the training result obtained as a mechanical fault type analysis result; or
    training a fluid dynamics fault diagnosis model with the feature and the operation process parameter as input parameters, and taking the training result obtained as a fluid dynamics abnormality type analysis result; wherein
    a training process of a fluid dynamics abnormality identification model is disturbed based on an image data enhancement method.

14. The method according to claim 13, further comprising:
training the mechanical fault diagnosis model as follows:

screening historical operation data, so as to select operation data calibrated as the mechanical fault;

obtaining a mechanical fault type and a historical detection signal corresponding to each piece of operation data;

performing fused analysis of singular spectrum and higher-order spectrum on the historical detection signal acquired, and extracting a corresponding feature, so as to obtain intensity and a phase feature of higher-order spectrum data in a frequency domain; and

training a mechanical fault type identification model with the intensity and the phase feature of the higher-order spectrum data in the frequency domain as input parameters and the corresponding fault type as guide output, so as to obtain the mechanical fault diagnosis model.

**15.** The method according to claim 13, further comprising:
training the fluid dynamics fault diagnosis model as follows:

screening historical operation data, so as to select operation data calibrated as the fluid dynamics fault;

obtaining a fluid dynamics fault type and a historical detection signal corresponding to each piece of operation data;

performing short-time Fourier transform on the historical detection signal acquired, and extracting a corresponding feature, so as to obtain a spectral image; and

training a fluid dynamics fault type identification model with the spectral image as an input parameter and the corresponding fault type as guide output, so as to obtain the fluid dynamics fault diagnosis model.

**16.** The method according to claim 1, further comprising:

obtaining acoustic field nephogram information of each frequency band in each acoustic frequency segment, and comparing the acoustic field nephogram information of each frequency band with preset standard acoustic field nephogram information, so as to obtain an acoustic field nephogram deviation of each frequency band;

obtaining a total deviation matrix based on the acoustic field nephogram deviation of each frequency band;

training a preset acoustic field fault identification model with the total deviation matrix as an input parameter, so as to obtain an equipment abnormality result under a current working condition; and

comparing the equipment abnormality result obtained based on the acoustic field fault identification model with an equipment abnormality result obtained based on the fault diagnosis model to verify the equipment abnormality result obtained based on the fault diagnosis model.

**17.** A device for detecting a fault of mechanical equipment, comprising:

a signal acquisition module configured to acquire a detection signal of target equipment;
a signal classification module configured to classify a fault type of the detection signal based on an autocorrelation characteristic;
a model selection module configured to select a corresponding fault diagnosis model based on a classification result; and
a fault diagnosis module configured to diagnose the fault based on the fault diagnosis model selected and the detection signal, so as to obtain a diagnosis result.

**18.** The device according to claim 17, wherein the detection signal comprises an acoustic signal and/or a vibration signal; and an operation process parameter of the target equipment; and the operation process parameter comprises one or more of:
operation temperature information, pressure information, flow information, or fixation mode information.

**19.** The device according to claim 17, wherein the mechanical equipment is equipment provided with a moving component that generates a vibration signal and/or an acoustic signal during working.

**20.** The device according to claim 17, wherein the signal classification module is further configured to:

identify an equipment type of the target equipment;
determine a feature of the detection signal of the target equipment based on the equipment type; and
determine a filter rule based on the feature of the detection signal, and acquire the detection signal of the target equipment based on the filter rule.

**21.** The device according to claim 17, further comprising a verification module configured to:

obtain acoustic field nephogram information of each frequency band in each acoustic frequency segment, and compare the acoustic field nephogram information of each frequency band with preset standard acoustic field nephogram information, so as to obtain an acoustic field nephogram deviation of each frequency band;

obtain a total deviation matrix based on the acoustic field nephogram deviation of each frequency band;

train a preset acoustic field fault identification model with the total deviation matrix as an input parameter, so as to obtain an equipment abnormality result under a current working condition; and

compare the equipment abnormality result obtained based on the acoustic field fault identification model with an equipment abnormality result obtained based on the fault diagnosis model to verify the equipment abnormality result obtained based on the current fault diagnosis model.

22. A system for detecting a fault of mechanical equipment, comprising the device for detecting a fault of mechanical equipment according to any one of claims 17-21.

23. A computer-readable storage medium, storing an instruction, wherein when run on a computer, the instruction causes the computer to execute the method for detecting a fault of mechanical equipment according to any one of claims 1-16.

S10

A detection signal of target equipment is acquired

S20

A fault type of the detection signal is classified based on an autocorrelation characteristic

S30

A corresponding fault diagnosis model Is selected based on a classification result

S40

A fault is diagnosed based on the fault diagnosis model selected and the detection signal, so as to obtain a diagnosis result

Fig. 1

Signal acquisition module

Signal classification module

Model selection module

Fault diagnosis module

Fig. 2

## INTERNATIONAL SEARCH REPORT

| International application No. |
| --- |
| **PCT/CN2024/084973** |

**A.    CLASSIFICATION OF SUBJECT MATTER**

G10L 21/0264(2013.01)i; G01M13/028(2019.01)i; G01M13/045(2019.01)i

According to International Patent Classification (IPC) or to both national classification and IPC

**B.    FIELDS SEARCHED**

Minimum documentation searched (classification system followed by classification symbols)

IPC:G10L21 G01M13 G01M9 G01H17

Documentation searched other than minimum documentation to the extent that such documents are included in the fields searched

Electronic data base consulted during the international search (name of data base and, where practicable, search terms used)

CNTXT, ENTXTC, WPABSC, ENTXT, DWPI, VEN, CNKI, Web of Science: 自相关, 故障, 异常, 机械, 风机, 电机, 轮机, 泵, 流体力学, 空气动力学, 气蚀, 湍流, 类型, 种类, 不同, 分类, 单一, 固定, 对应, 熵, 振动, 声音, 声场, 图, 分布, 频段, 频率, autocorrelation, fault+, failure, mechanical, machine?, fan?, motor?, turbine?, pump?, fluid, aerodynamic?, cavitation, turbulence, type, kind, differen??, classification, single, fixed, corresponding, entrop???, vibration, sound?, noise?, map, distribution, frequency

**C.    DOCUMENTS CONSIDERED TO BE RELEVANT**

| Category* | Citation of document, with indication, where appropriate, of the relevant passages | Relevant to claim No. |
| --- | --- | --- |
| Y | WO 2021035638 A1 (EQUOTA ENERGY TECHNOLOGY (SHANGHAI) CO., LTD.) 04 March 2021 (2021-03-04)<br>　　description, pages 1-3 and 6-8 | 1-9, 17-20, 22-23 |
| Y | 李兴慧 等 (LI, Xinghui et al.). "自相关函数在机械故障诊断中的应用 (The Application of Autocorrelation Function in the Mechanical Fault Diagnosis)"<br>机械设计与制造 *(Machinery Design & Manufacture)*,<br>No. 10, 31 October 2018 (2018-10-31), 24-31<br>ISSN: 1001-3997,<br>　　text, page 25 | 1-9, 17-20, 22-23 |
| A | CN 112598537 A (HEBEI CONSTRUCTION & INVESTMENT GROUP CO., LTD.) 02 April 2021 (2021-04-02)<br>　　entire document | 1-23 |

☑ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 June 2024** | **05 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/084973** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 20210105195 A (DOOSAN HEAVY INDUSTRIES & CONSTRUCTION CO., LTD.) 26 August 2021 (2021-08-26)<br>entire document | 1-23 |
| A | CN 115272560 A (CHINA ELECTRIC POWER RESEARCH INSTITUTE CO., LTD.) 01 November 2022 (2022-11-01)<br>entire document | 1-23 |

Form PCT/ISA/210 (second sheet) (July 2022)

**INTERNATIONAL SEARCH REPORT**
Information on patent family members

International application No.

**PCT/CN2024/084973**

| Patent document cited in search report | | | Publication date (day/month/year) | Patent family member(s) | | | Publication date (day/month/year) |
|---|---|---|---|---|---|---|---|
| WO | 2021035638 | A1 | 04 March 2021 | CN | 113632026 | A | 09 November 2021 |
| CN | 112598537 | A | 02 April 2021 | CN | 112598537 | B | 02 August 2022 |
| KR | 20210105195 | A | 26 August 2021 | KR | 102350635 | B1 | 14 January 2022 |
| CN | 115272560 | A | 01 November 2022 | CN | 115272560 | B | 19 September 2023 |

Form PCT/ISA/210 (patent family annex) (July 2022)